# EUROPÄISCHE PATENTANMELDUNG

(11) **EP 1 079 189 A1**
(43) Veröffentlichungstag der Anmeldung: **28.02.2001**
(21) Anmeldenummer: 99810753.6
(22) Anmeldetag: 23.08.1999
(51) Int. Cl.: F26B 23/00, D21F 5/20

(54) **Verfahren und Anordnung zur Energierückgewinnung**

(71) Anmelder: Weber, Reinhard, 3012 Bern (CH)
(72) Erfinder: Weber, Reinhard, 3012 Bern (CH)
(74) Vertreter: Roshardt, Werner Alfred, Dipl.-Phys.

(57) **Zusammenfassung**

Bei einem Verfahren zur Rückgewinnung von Energie aus der aus einer Trockenhaube (10) einer Papiermaschine ausströmenden Haubenabluft wird die Haubenabluft wenigstens einem Wärmetauscher (40, 50) zugeführt, wobei die Haubenabluft nach dem Austritt aus der Trockenhaube (10) und vor dem Eintritt in den Wärmetauscher (40, 50) angefeuchtet wird, um die Wärmedurchgangszahl für den Wärmeaustausch beim Durchgang der Haubenabluft durch den Wärmetauscher (40, 50) hindurch zu erhöhen. Dadurch kann der Gesamtwirkungsgrad für die Energierückgewinnung erhöht werden.

## Beschreibung

### Technisches Gebiet

Die vorliegende Erfindung betrifft ein Verfahren zur Rückgewinnung von Energie aus der Haubenabluft einer Papiermaschine und eine Anordnung zur Durchführung des Verfahrens.

### Stand der Technik

Es ist bekannt, dass Papiermaschinen und insbesondere deren Trockenpartien für den Betrieb grosse Mengen an Energie in Form von Wärme benötigen, um die Papierbahn, welche im Anschluss an ihre Herstellung nass ist, zu trocknen. Zum Trocknen der Papierbahn ist die Trockenpartie einer Papiermaschine üblicherweise von einer Trockenhaube umgeben. Der Trockenhaube wird möglichst heisse und trockene Luft (Haubenzuluft) zugeführt. Innerhalb der Haube kommt die Haubenzuluft in Kontakt mit der nassen Papierbahn. Dabei verdampft ein Teil der Flüssigkeit aus der Papierbahn. Durch das Verdampfen wird die Haubenluft abgekühlt und angefeuchtet. Anschliessend wird sie als Haubenabluft aus der Haube abgelassen. Die Haubenabluft ist zwar kühler als die Haubenzuluft und weist einen höheren Wasserdampfgehalt auf als diese, sie enthält jedoch immer noch einen relativ hohen Wärmegehalt, wobei sich die Wärme der Haubenabluft im wesentlichen aus fühlbarer Wärme (der Luft) und aus latenter Wärme (des Wasserdampfes) zusammensetzt. Sowohl aus ökonomischen als auch aus ökologischen Gründen ist eine möglichst gute Rückgewinnung bzw. eine effiziente Verwertung der in der Haubenabluft enthaltenen Restwärme wünschenswert.

In der schweizerischen Patentschrift CH-A5-664 586 wird eine an eine Trockenhaube einer Papiermaschine anschliessbare Einrichtung zur Restwärmeverwertung beschrieben. Gemäss dieser Druckschrift wird die Haubenabluft nach dem Austritt aus der Trockenhaube zunächst in einem Kompressor komprimiert, dann durch drei in Reihe geschaltete Wärmetauscher hindurch geführt und anschliessend über eine Turbine entspannt und in die Umwelt abgeblasen, wobei die Turbine in antreibender Funktion mit dem Kompressor verbunden ist. Im Vergleich zu üblichen Wärmerückgewinnungssystemen, bei denen die Haubenabluft bloss über eine Serie von Wärmetauschern abgeführt wird, kann mit einer Einrichtung gemäss der CH-A5-664 586 zwar eine gewisse Verbesserung des Gesamtwirkungsgrades bei der Wärmerückgewinnung aus der Haubenabluft erreicht werden. Der in der Praxis erreichbare Gesamtwirkungsgrad ist jedoch immer noch relativ weit von dem gemäss Theorie maximal möglichen Gesamtwirkungsgrad entfernt.

### Darstellung der Erfindung

Aufgabe der Erfindung ist es, ein Verfahren zur Rückgewinnung von Energie aus der Haubenabluft einer Papiermaschine und eine Anordnung zur Durchführung des Verfahrens anzugeben, welche im Vergleich zu bisher bekannten entsprechenden Systemen eine Erhöhung des Gesamtwirkungsgrades für die Energierückgewinnung ermöglichen.

Die Lösung der Aufgabe ist durch die Merkmale der unabhängigen Ansprüche definiert. Gemäss der Erfindung wird bei einem Verfahren zur Rückgewinnung von Energie aus der aus einer Trockenhaube einer Papiermaschine ausströmenden Haubenabluft die Haubenabluft wenigstens einem Wärmetauscher zugeführt, wobei die Haubenabluft nach dem Austritt aus der Trockenhaube und vor dem Eintritt in den Wärmetauscher angefeuchtet wird, um die Wärmedurchgangszahl für den Wärmeaustausch beim Durchgang der Haubenabluft durch den Wärmetauscher hindurch zu erhöhen.

Unter dem Anfeuchten eines Gases (insbesondere Luft) wird im Zuge der vorliegenden Beschreibung und der Patentansprüche verstanden, dass der absolute Wasserdampfgehalt eines aus diesem Gas und Wasserdampf zusammengesetzten Gasgemisches erhöht wird. Das Anfeuchten eines Gases kann z.B. durch Zufuhr von Wasser bzw. Wasserdampf an das Gas mittels einer Befeuchtungsvorrichtung in Form eines Wasserbestäubers oder eines Verdampfers erfolgen.

Durch das Anfeuchten der Haubenabluft, bevor diese einem Wärmetauscher zugeführt wird, wird die Wärmedurchgangszahl (auch als k-Wert bezeichnet) für den Wärmeaustausch bzw. die Wärmeübertragung beim anschliessenden Durchgang der Haubenabluft durch den Wärmetauscher hindurch erhöht. Diese Wärmedurchgangszahl ist nämlich sowohl im Falle eines Gas/Flüssigkeits-Wärmetauschers (mit einer Wärmeübertragung von einem gasförmigen heizenden Medium an ein aufzuheizendes Medium in einem flüssigen Aggregatszustand) als auch im Falle eines Gas/Gas-Wärmetauschers (mit einer Wärmeübertragung von einem gasförmigen heizenden Medium an ein aufzuheizendes Medium in einem gasförmigen Aggregatszustand) für Wasserdampf als heizendes Medium wesentlich höher als für trockene Luft als heizendes Medium.

Die in einem Wärmetauscher von einem heizenden Medium an ein aufzuheizendes Medium übertragene Wärme- bzw. Energiemenge (d.h. der sogenannte Wärmedurchgang) ist einerseits proportional zu der im Wärmetauscher verfügbaren Austauschfläche (und somit zur Baugrösse des Wärmetauschers) und andrerseits proportional zur Wärmedurchgangszahl. Die Erhöhung der Wärmedurchgangszahl, wie sie durch die Erfindung erreicht wird, kann deshalb einerseits ausgenutzt werden, um ohne bauliche Veränderung der Wärmetauscher den Gesamtwirkungsgrad des Energierückgewinnungssystems für die Trockenpartie einer Papiermaschine zu erhöhen bzw. deren Effizienz zu steigern. Andrerseits kann die Erhöhung der Wärmedurchgangszahl auch ausgenutzt werden, um ohne Effizienzeinbusse die Baugrösse des Energierückgewinnungssystems der Papiermaschine zu verkleinern, indem kleinere Wärmetauscher mit gleichem Wärmedurchgang verwendet werden können.

Bei einem erfindungsgemässen Verfahren wird die Haubenabluft vor dem Eintritt in den Wärmetauscher vorzugsweise derart angefeuchtet, dass sie im wesentlichen ihre Sättigungsgrenze erreicht. D.h., dass die Haubenabluft solange angefeuchtet wird, bis die feuchte Haubenabluft (bzw. das Luft-Wasserdampf-Gemisch) eine relative Luftfeuchtigkeit von ungefähr 100% erreicht hat.

Vorzugsweise wird die Haubenabluft nach dem Austritt aus der Trockenhaube und vor dem Anfeuchten zur weiteren Erhöhung der Wärmedurchgangszahl komprimiert. Das Komprimieren bzw. Verdichten der Haubenabluft erfolgt vorteilhafterweise in einem im wesentlichen adiabatischen Vorgang. Die Haubenabluft kann auf einen Druck im Bereich zwischen ungefähr 2 und ungefähr 3 bar komprimiert werden, wobei ein Druck von ungefähr 2.5 bar bevorzugt wird.

Gemäss der Erfindung umfasst eine an eine Trockenhaube einer Papiermaschine anschliessbare Energierückgewinnungsanordnung wenigstens einen Wärmetauscher und eine Haubenabluftleitung, durch welche hindurch die Haubenabluft von der Trockenhaube dem wenigstens einen Wärmetauscher zugeführt wird, sowie eine Befeuchtungsvorrichtung, die zwischen der Trockenhaube und dem Wärmetauscher an die Haubenabluftleitung angeschlossen ist und zum Anfeuchten der Haubenabluft dient.

Gemäss einer bevorzugten Ausführungsart der Erfindung umfasst die Anordnung weiter eine Kompressorvorrichtung, die zwischen der Trockenhaube und dem Befeuchtungsvorrichtungsanschluss an die Haubenabluftleitung angeschlossen ist und zum Verdichten der Haubenabluft dient. Bei dieser Ausführungsart kann die Anordnung weiter eine Turbinenvorrichtung umfassen, welcher die Haubenabluft nach deren Durchgang durch den wenigstens einen Wärmetauscher hindurch zugeführt wird, um diese Turbinenvorrichtung anzutreiben, wobei die Turbinenvorrichtung ihrerseits mechanisch in antreibender Funktion mit der Kompressorvorrichtung gekoppelt ist. Als Alternative zur Verwendung der Turbinenvorrichtung für den Kompressorantrieb kann diese z.B. auch zur Stromerzeugung verwendet werden, indem sie z.B. einen Generator antreibt.

Eine erfindungsgemässe Energierückgewinnungsanordnung kann einen Gas/Flüssigkeit-Wärmetauscher umfassen, in welchem Wärme von der Haubenabluft an Wasser übertragen wird, das zum Anfeuchten der Haubenabluft wenigstens teilweise der Befeuchtungsvorrichtung zugeführt wird.

Eine erfindungsgemässe Energierückgewinnungsanordnung kann auch einen Gas/Gas-Wärmetauscher umfassen, in welchem Wärme von der Haubenabluft an Luft übertragen wird, welche anschliessend als Haubenzuluft der Trockenhaube zugeführt wird.

Gemäss einer bevorzugten Ausführungsart der Erfindung umfasst eine Energierückgewinnungsanordnung eine Kompressorvorrichtung, eine Luftbefeuchtungsvorrichtung, einen Gas/Gas-Wärmetauscher, einen Gas/Flüssigkeit-Wärmetauscher und eine Turbinenvorrichtung, die in Reihe geschaltet und mittels Rohrleitungen für die Haubenabluft seriell an eine Trockenhaube angeschlossen und miteinander verbunden sind.

Eine erfindungsgemäss ausgerüstete Papiermaschine weist eine Trockenhaube auf und eine Haubenabluftleitung, durch welche hindurch die Haubenabluft von der Trockenhaube wenigstens einem Wärmetauscher zugeführt wird, wobei zwischen der Trockenhaube und dem Wärmetauscher eine Befeuchtungsvorrichtung zum Anfeuchten der Haubenabluft an die Haubenabluftleitung angeschlossen ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnung

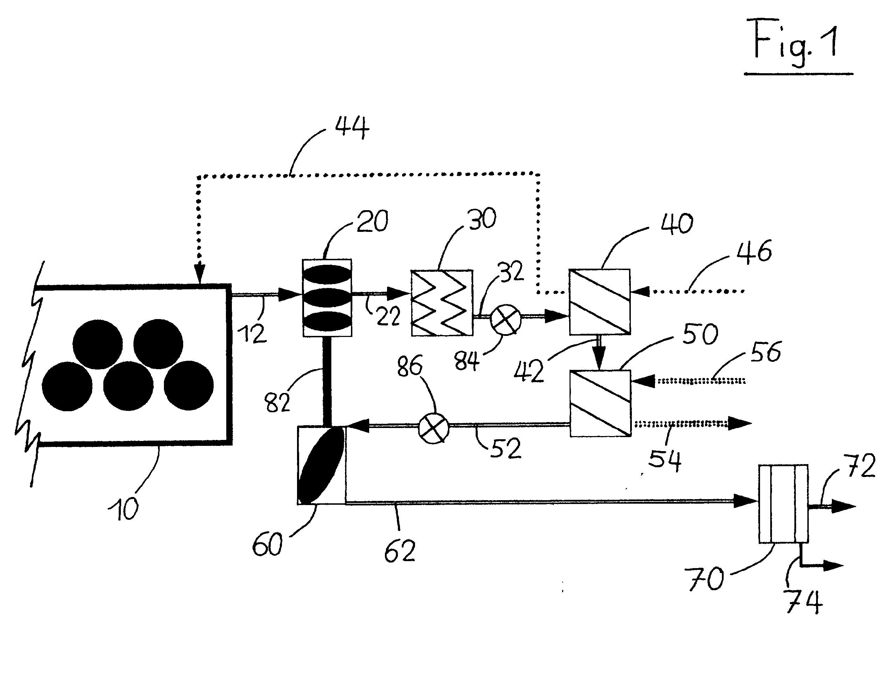

Die zur Erläuterung eines Ausführungsbeispiels verwendete Zeichnung Fig. 1 zeigt eine vereinfachte, schematische Darstellung einer Anordnung zur Rückgewinnung von Energie aus der aus einer Trockenhaube einer Papiermaschine ausströmenden Haubenabluft gemäss einer bevorzugten Ausführungsform der Erfindung.

### Wege zur Ausführung der Erfindung

In Fig. 1 ist schematisch in vereinfachter Form eine Anordnung zur Rückgewinnung von Energie aus der aus einer Trockenhaube 10 einer Papiermaschine ausströmenden Haubenabluft dargestellt. Die zu den verschiedenen in Fig. 1 dargestellten Rohrleitungen 12, 22, 32, 42, 44, 46, 52, 54, 56, 62, 72, 74 angegebenen Pfeile stellen jeweils die Strömungsrichtungen der in diesen Rohrleitungen 12, 22, 32, 42, 44, 46, 52, 54, 56, 62, 72, 74 geführten Medien an.

Aus der Trockenhaube 10 strömt die Haubenabluft durch eine die Trockenhaube 10 mit einem Kompressor 20 verbindende Haubenabluftleitung 12 hindurch in den Kompressor 20. Die aus der Trockenhaube 10 ausströmende Haubenabluft weist im wesentlichen Umgebungsdruck auf (d.h. in der Regel ca. 1.0 bar) und hat eine Temperatur von ungefähr 90 °C. Bei dem in Fig. 1 dargestellten Ausführungsbeispiel besteht der Kompressor 20 aus einem Axialkompressor 20. Ebensogut könnten jedoch auch andere zum Komprimieren eines gasförmigen Mediums geeignete Kompressortypen verwendet werden.

Die Haubenabluft wird mittels des Axialkompressor 20 auf ungefähr den zweieinhalbfachen Wert des Umgebungsdruckes (d.h. in der Regel auf ungefähr 2.5 bar) komprimiert. Die Kompression wird im wesentlichen als adiabatischer Vorgang durchgeführt, d.h., während der Kompression findet kein wesentlicher Wärmeaustausch zwischen der komprimierten Haubenabluft und ihrer Umgebung (insbesondere dem Kompressor 20) statt. Die Haubenabluft erfährt demzufolge aufgrund des Kompressionsvorgangs eine adiabatische Erwärmung und hat beim Austritt aus dem Kompressor 20 eine Temperatur von ungefähr 200 °C.

Anschliessend wird die komprimierte Haubenabluft vom Kompressor 20 über eine Verbindungsleitung 22 einem Luftbefeuchter 30 zugeführt. Bei dem in Fig. 1 dargestellten Ausführungsbeispiel besteht der Luftbefeuchter 30 aus einem Wasserzerstäuber 30, welcher zum Anfeuchten der Haubenabluft diese mit kleinen flüssigen Wassertröpfchen besprüht. Bei anderen Ausführungsformen der Erfindung können jedoch auch andere gebräuchliche Typen von Luftbefeuchtern eingesetzt werden, so z.B. sog. Dampfbefeuchter, welche zum Anfeuchten der Luft dieser Wasserdampf beimischen. Die Haubenabluft wird mittels des Luftbefeuchters 30 in einem Ausmass derart angefeuchtet, bis sie im wesentlichen ihren Sättigungspunkt erreicht hat.

Die komprimierte und im wesentlichen gesättigte Haubenabluft wird danach vom Luftbefeuchter 30 über eine Rohrleitung 32 einem Gas/Gas-Wärmetauscher 40 zugeführt, wobei die Rohrleitung 32 zur Rückflussverhinderung mit einem Rückschlagventil 84 versehen ist.

Im Gas/Gas-Wärmetauscher 40 wird Wärme von der Haubenabluft auf die von dieser durch eine separates Rohrleitungssystem getrennte Haubenzuluft übertragen, um letztere zu erwärmen. Aufgrund der vorgängigen Anfeuchtung und Kompression der Haubenabluft erfolgt diese Wärmeübertragung mit einem grösseren Wärmeduchgangswert, als dies ohne Anfeuchtung und Kompression der Haubenabluft der Fall wäre. Durch die Wärmeübertragung wird die Haubenabluft auf eine Temperatur zwischen ungefähr 80°C und ungefähr 120°C abgekühlt. Die Haubenzuluft gelangt als Umgebungstemperatur und Umgebungsdruck aufweisende Frischluft über eine Frischluftleitung 46 zum Wärmetauscher 40, wird in diesem auf eine Temperatur zwischen ungefähr 80°C und ungefähr 120°C erwärmt und anschliessend durch eine den Gas/Gas-Wärmetauscher 40 mit der Trockenhaube 10 verbindende Haubenzuluftleitung 44 hindurch der Trockenhaube 10 zugeführt, wobei sie immer noch im wesentlichen Umgebungsdruck aufweist.

Die Haubenabluft wird vom Gas/Gas-Wärmetauscher 40 über eine Verbindungsleitung 42 einem Gas/Flüssigkeit-Wärmetauscher 50 zugeführt. Im Gas/Flüssigkeit-Wärmetauscher 50 wird Wärme von der Haubenabluft auf ein flüssiges Medium übertragen, um dieses zu erwärmen. Aufgrund der vorgängigen Anfeuchtung und Kompression der Haubenabluft erfolgt diese Wärmeübertragung wiederum mit einem grösseren Wärmeduchgangswert, als dies ohne Anfeuchtung und Kompression der Haubenabluft der Fall wäre. Bei dem in Fig. 1 dargestellten Ausführungsbeispiel handelt es sich beim flüssigen Medium um Wasser, das über eine Zuleitung 56 dem Gas/Flüssigkeit-Wärmetauscher 50 zugeführt wird und über eine Ableitung 54 von diesem weg fliesst. Das durch die Ableitung 54 wegfliessende, im Gas/Flüssigkeit-Wärmetauscher 50 erwärmte Wasser kann für verschiedene Zwecke als Prozesswasser für die Papiermaschine verwendet werde. Es kann z.B. wenigstens teilweise dem Wasserzerstäuber 30 zugeführt und zum Anfeuchten der Haubenabluft verwendet werden.

Vom Gas/Flüssigkeit-Wärmetauscher 50 aus wird die Haubenabluft anschliessend über eine Rohrleitung 52 einer Turbine 60 zugeführt, wobei die Rohrleitung 52 zur Rückflussverhinderung mit einem Rückschlagventil 86 versehen ist. Die Haubenabluft treibt die Turbine 60 an und wird dabei auf den Umgebungsdruck entspannt. Die Turbine 60 ist über eine Antriebswelle 82 mit dem Kompressor 20 verbunden, um diesen anzutreiben. Es versteht sich von selbst, dass zwischen der Turbine 60 und dem Kompressor 20 weiter ein Getriebe (nicht dargestellt) zur Drehzahlanpassung angeordnet sein kann, und dass ein Motor (nicht dargestellt) als zusätzliche und/oder ergänzende Antriebsquelle für den Kompressor 20 vorgesehen sein kann.

Schliesslich wird die entspannte Haubenabluft von der Turbine 60 über eine Verbindungsleitung 62 einem Verflüssiger 70 zugeführt. In diesem wird ein Teil der noch in der Haubenabluft enthaltenen Restfeuchtigkeit durch Kondensation verflüssigt und über eine Flüssigkeitsleitung 74 der Papiermaschine als Prozesswasser zugeführt, während die getrocknete Haubenabluft über die Abluftleitung 72 in die Umgebung abgeblasen wird. Die bei der Kondensation freigesetzte Verdampfungswärme kann z.B. zum Vorwärmen der Haubenzuluft oder für andere Zwecke genutzt werden. Das im Verflüssiger 70 aus der Haubenabluft kondensierte Wasser kann z.B. von der Flüssigkeitsleitung 74 in die Zuleitung 56 des Gas/Flüssigkeit-Wärmetauschers 50 eingespiesen, in diesem erwärmt und anschliessend über dessen Ableitung 54 dem Wasserzerstäuber 30 zugeführt werden, wo es zum Anfeuchten der Haubenabluft dieser wiederum beigemischt werden kann.

Zusammenfassend ist festzustellen, dass durch die Erfindung ein Verfahren zur Rückgewinnung von Energie aus der Haubenabluft einer Papiermaschine und eine Anordnung zur Durchführung des Verfahrens bereit gestellt werden, welche im Vergleich zu bisher bekannten entsprechenden Systemen eine Erhöhung des Gesamtwirkungsgrades für die Energierückgewinnung ermöglichen.

## Patentansprüche

1. Verfahren zur Rückgewinnung von Energie aus der aus einer Trockenhaube (10) einer Papiermaschine ausströmenden Haubenabluft, bei welchem die Haubenabluft wenigstens einem Wärmetauscher (40, 50) zugeführt wird, dadurch gekennzeichnet, dass die Haubenabluft nach dem Austritt aus der Trockenhaube (10) und vor dem Eintritt in den Wärmetauscher (40, 50) angefeuchtet wird, um die Wärmedurchgangszahl für den Wärmeaustausch beim Durchgang der Haubenabluft durch den Wärmetauscher (40, 50) hindurch zu erhöhen.

2. Verfahren nach Anspruch 1, dadurch gekennzeichnet, dass die Haubenabluft vor dem Eintritt in den Wärmetauscher (40, 50) derart angefeuchtet wird, dass sie im wesentlichen ihre Sättigungsgrenze erreicht.

3. Verfahren nach Anspruch 1 oder 2, dadurch gekennzeichnet, dass die Haubenabluft nach dem Austritt aus der Trockenhaube (10) und vor dem Anfeuchten zur weiteren Erhöhung der Wärmedurchgangszahl komprimiert wird.

4. Verfahren nach Anspruch 3, dadurch gekennzeichnet, dass die Haubenabluft auf einen Druck im Bereich zwischen ungefähr 2 und ungefähr 3 bar komprimiert wird.

5. An eine Trockenhaube (10) einer Papiermaschine anschliessbare Anordnung zur Durchführung des Verfahrens nach einem der Ansprüche 1 bis 4, mit einer Haubenabluftleitung (12, 22, 32), durch welche hindurch die Haubenabluft von der Trockenhaube (10) wenigstens einem Wärmetauscher (40, 50) zugeführt wird, dadurch gekennzeichnet, dass zwischen der Trockenhaube (10) und dem Wärmetauscher (40, 50) eine Befeuchtungsvorrichtung (30) zum Anfeuchten der Haubenabluft an die Haubenabluftleitung (12, 22, 32) angeschlossen ist.

6. Anordnung nach Anspruch 5, dadurch gekennzeichnet, dass zwischen der Trockenhaube (10) und dem Befeuchtungsvorrichtungsanschluss eine Kompressorvorrichtung (20) zum Verdichten der Haubenabluft an die Haubenabluftleitung (12, 22) angeschlossen ist.

7. Anordnung nach Anspruch 6, dadurch gekennzeichnet, dass die Haubenabluft nach dem Durchgang durch den wenigstens einen Wärmetauscher (40, 50) einer Turbinenvorrichtung (60) zugeführt wird und diese antreibt, wobei die Turbinenvorrichtung (60) in antreibender Funktion mit der Kompressorvorrichtung (20) gekoppelt ist.

8. Anordnung nach Anspruch 7, dadurch gekennzeichnet, dass die Haubenabluft nach dem Durchgang durch die Turbinenvorrichtung (60) einer Verflüssigervorrichtung (70) zugeführt wird, in welcher wenigstens ein Teil der noch in der Haubenabluft enthaltenen Restfeuchtigkeit durch Kondensation verflüssigt wird und anschliessend als Prozesswasser der Papiermaschine zugeführt wird.

9. Anordnung nach einem der Ansprüche 5 bis 8, dadurch gekennzeichnet, dass sie einen Gas/Flüssigkeit-Wärmetauscher (50) umfasst, in welchem Wärme von der Haubenabluft an Wasser übertragen wird, das zum Anfeuchten der Haubenabluft wenigstens teilweise der Befeuchtungsvorrichtung (30) zugeführt wird.

10. Anordnung nach einem der Ansprüche 5 bis 9, dadurch gekennzeichnet, dass sie einen Gas/Gas-Wärmetauscher (40) umfasst, in welchem Wärme von der Haubenabluft an Luft übertragen wird, welche als Haubenzuluft der Trockenhaube (10) zugeführt wird.

11. Anordnung nach den Ansprüchen 5, 6, 7, 8, 9 und 10, dadurch gekennzeichnet, dass die Trockenhaube (10), die Kompressorvorrichtung (20), die Luftbefeuchtungsvorrichtung (30), der Gas/Gas-Wärmetauscher (40), der Gas/Flüssigkeit-Wärmetauscher (50), die Turbinenvorrichtung (60) und die Verflüssigervorrichtung (70) in Reihe geschaltet sind, wobei sie mittels der Rohrleitungen (12, 22, 32, 42, 52, 62) für die Haubenabluft seriell miteinander verbunden sind.

12. Papiermaschine mit einer Trockenhaube (10) und einer Haubenabluftleitung (12, 22, 32), durch welche hindurch die Haubenabluft von der Trockenhaube (10) wenigstens einem Wärmetauscher (40, 50) zugeführt wird, dadurch gekennzeichnet, dass zwischen der Trockenhaube (10) und dem Wärmetauscher (40, 50) eine Befeuchtungsvorrichtung (30) zum Anfeuchten der Haubenabluft an die Haubenabluftleitung (12, 22, 32) angeschlossen ist.
